# EUROPÄISCHE PATENTANMELDUNG

(11) **EP 3 473 464 A1**
(43) Veröffentlichungstag der Anmeldung: **24.04.2019**
(21) Anmeldenummer: 18186299.6
(22) Anmeldetag: 30.07.2018
(51) Int. Cl.: B60K 6/40, B60K 6/405, B60K 1/04, B60K 1/00, B60K 17/00

(54) **ANTRIEBSEINRICHTUNG UND VERFAHREN ZUM HERSTELLEN EINER ANTRIEBSEINRICHTUNG**

(30) Priorität: 23.10.2017 DE 102017218868
(71) Anmelder: AUDI AG, 85045 Ingolstadt (DE)
(72) Erfinder: Scharlach, Albert, 85129 Oberdolling (DE); Albl, Sebastian, 85080 Gaimersheim (DE); Schreiner, Manuel, 85051 Ingolstadt (DE)

(57) **Zusammenfassung**

Die Erfindung betrifft eine Antriebseinrichtung (2) für ein Fahrzeug, die eine Elektromaschine (4), eine Leistungselektronik (16) und ein Getriebe (8) aufweist, wobei die Leistungselektronik (16) zwischen einer Welle (6) der Elektromaschine (4) und einer Welle (14) des Getriebes (8) angeordnet ist.

## Beschreibung

Die Erfindung betrifft eine Antriebseinrichtung und ein Verfahren zum Herstellen einer Antriebseinrichtung.

Ein Fahrzeug kann eine Elektromaschine aufweisen, mit der das Fahrzeug angetrieben wird. Dabei ist der Elektromaschine eine Leistungseinheit zugeordnet. Außerdem ist die Elektromaschine mit einem Getriebe des Fahrzeugs verbunden.

Ein elektrisches Antriebssystem für ein Kraftfahrzeug ist aus der Druckschrift DE 10 2010 020 576 A1 bekannt. Dieses Antriebssystem umfasst einen Energiespeicher, eine elektrische Maschine und eine Leistungselektronik, die zwischen dem Energiespeicher und der elektrischen Maschine angeordnet ist.

Eine Antriebseinheit für ein Kraftfahrzeug mit einem elektrischen Antriebsmotor und einem Wechselgetriebe ist in der Druckschrift DE 20 2005 019 438 U1 beschrieben. Hierbei sind der Antriebsmotor und das Wechselgetriebe in integrierter Bauweise in einem Gehäuse angeordnet.

Die Druckschrift DE 197 00 893 C1 beschreibt einen seriellen Elektro-HybridAntrieb mit einem kinetischen Speicher für einen umweltschonenden Betrieb eines Kraftfahrzeugs.

Vor diesem Hintergrund war es eine Aufgabe, einen Antrieb für ein Fahrzeug bauraumsparend auszubilden.

Diese Aufgabe wird mit einer Antriebseinrichtung und einem Verfahren mit den Merkmalen der unabhängigen Patentansprüche gelöst. Ausführungsformen der Antriebseinrichtung und des Verfahrens gehen aus den abhängigen Patentansprüchen und der Beschreibung hervor.

Die erfindungsgemäße Antriebseinrichtung für ein Fahrzeug ist zum Antreiben mindestens eines Rads und/oder mindestens einer Achse des Fahrzeugs bzw. zum Fortbewegen des Fahrzeugs ausgebildet und weist eine Elektromaschine, eine Leistungselektronik und ein Getriebe auf. Dabei ist die Leistungselektronik zwischen einer Welle der Elektromaschine und einer Welle des Getriebes angeordnet.

Das Getriebe weist als mindestens eine Komponente bzw. Getriebekomponente ein Differential auf, wobei das Differential die Welle des Getriebes aufweist, wobei die Leistungselektronik zwischen der Welle der Elektromaschine und der Welle des Differentials des Getriebes angeordnet ist.

Die Welle der Elektromaschine und die Welle des Getriebes sind in Ausgestaltung zueinander parallel angeordnet. Dabei ist es möglich, dass beide Wellen senkrecht zu einer Fahrtrichtung des Fahrzeugs angeordnet bzw. orientiert sind.

Üblicherweise ist die Leistungselektronik zwischen der Elektromaschine und dem Getriebe, bspw. der als Differential ausgebildeten Getriebekomponente, angeordnet.

Weiterhin ist vorgesehen, dass die Welle der Elektromaschine als Rotorwelle und die Welle des Getriebes als Abtriebswelle ausgebildet ist.

Üblicherweise sind die Welle der Elektromaschine und die Welle des Getriebes über mindestens ein Zahnrad, mindestens ein Schaltelement und/oder mindestens eine Kupplung als mindestens eine Getriebekomponente des Getriebes miteinander verbindbar und/oder verbunden.

In Ausgestaltung sind die Elektromaschine und die Leistungselektronik in einem gemeinsamen Gehäuse anordenbar bzw. angeordnet. Alternativ hierzu ist die Leistungselektronik in einem eigenen Gehäuse anordenbar bzw. angeordnet, wobei die Elektromaschine ebenfalls in einem eigenen Gehäuse anordenbar bzw. angeordnet ist.

Weiterhin ist mindestens eine Getriebekomponente des Getriebes in mindestens einem eigenen Gehäuse angeordnet. Dabei ist es möglich, dass die Welle des Getriebes teilweise außerhalb des mindestens einen Gehäuses angeordnet ist.

Das erfindungsgemäße Verfahren ist zum Herstellen einer Antriebseinrichtung für ein Fahrzeug aus einer Elektromaschine, einer Leistungselektronik und einem Getriebe vorgesehen, wobei die Leistungselektronik im Rahmen des Verfahrens zwischen einer Welle der Elektromaschine und einer Welle des Getriebes angeordnet wird.

Bei dem Verfahren werden die Elektromaschine und die mindestens eine Getriebekomponente, bspw. zumindest die beiden Wellen der Elektromaschine und des Getriebes, zunächst miteinander verbunden. Die Leistungselektronik wird erst danach zwischen der Welle der Elektromaschine und der Welle des Getriebes angeordnet.

In Ausgestaltung wird die Leistungselektronik zwischen die Welle der Elektromaschine und die Welle des Getriebes geschoben. Dabei ist es möglich, dass die Leistungselektronik zwischen das Getriebe, bspw. dessen Differential, und die Elektromaschine geschoben wird.

Außerdem wird die Leistungselektronik in einem Gehäuse angeordnet, das eine Öffnung aufweist, die durch einen Deckel verschließbar ist, wobei der Deckel geöffnet wird, wobei die Leistungselektronik durch die Öffnung hindurch in dem Gehäuse zwischen der Elektromaschine und der Welle des Getriebes angeordnet wird, und wobei die Öffnung mit dem Deckel wieder verschlossen wird. Dabei wird die Leistungselektronik entweder in einem Gehäuse, das allein für die Leistungselektronik vorgesehen ist, oder in einem Gehäuse, das für die Elektromaschine und die Leistungselektronik vorgesehen ist, angeordnet.

Je nach Definition wird die Leistungselektronik zwischen der Elektromaschine und mindestens einer Komponente bzw. Getriebekomponente des Getriebes, bspw. dem Differential, angeordnet.

Eine Ausführungsform der erfindungsgemäßen Antriebseinrichtung ist üblicherweise durch eine Ausführungsform des erfindungsgemäßen Verfahrens herstellbar. Dabei wird die Leistungselektronik zwischen den zueinander parallel angeordneten Wellen der Elektromaschine und des Getriebes angeordnet. Je nach Definition ist die Welle der Elektromaschine als Rotorwelle ausgebildet und/oder zu bezeichnen. Die Welle des Getriebes, bspw. des Differentials des Getriebes, ist je nach Definition als Abtriebswelle ausgebildet und/oder zu bezeichnen.

Die vorgestellte Antriebseinrichtung benötigt somit einen geringen Bauraum. Falls die Antriebseinrichtung bspw. zum Antreiben mindestens eines hinteren Rads und/oder einer hinteren Achse des Fahrzeugs ausgebildet ist, ist es möglich, für einen Kofferraum des Fahrzeugs ein vergrößertes Volumen bereitzustellen. Außerdem ist die Leistungselektronik zwischen beiden Wellen robust anordenbar, wobei die Leistungselektronik bei einem Unfall bzw. einem Crash des Fahrzeugs nicht direkt beaufschlagt wird. Weiterhin ist eine bspw. elektronische Kontaktierung der Leistungselektronik, mit der die Leistungselektronik bspw. mit der Elektromaschine verbunden wird, durch das Getriebe, bspw. das Differential des Getriebes, geschützt.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben.
- Figur 1: zeigt in schematischer Darstellung Beispiele für Antriebe, die aus dem Stand der Technik bekannt sind.
- Figur 2: zeigt in schematischer Darstellung eine erste Ausführungsform der erfindungsgemäßen Antriebseinrichtung, aus unterschiedlichen Perspektiven, die durch eine erste Ausführungsform des erfindungsgemäßen Verfahrens hergestellt ist.
- Figur 3: zeigt in schematischer Darstellung eine zweite Ausführungsform der erfindungsgemäßen Antriebseinrichtung, die durch eine zweite Ausführungsform des erfindungsgemäßen Verfahrens hergestellt ist.
- Figur 4: zeigt in schematischer Darstellung eine dritte Ausführungsform der erfindungsgemäßen Antriebseinrichtung, die durch eine dritte Ausführungsform des erfindungsgemäßen Verfahrens hergestellt ist.
- Figur 5: zeigt in schematischer Darstellung eine vierte Ausführungsform der erfindungsgemäßen Antriebseinrichtung, die durch eine vierte Ausführungsform des erfindungsgemäßen Verfahrens hergestellt ist.

Die Figuren werden zusammenhängend und übergreifend beschrieben, gleichen Komponenten sind dieselben Bezugsziffern zugeordnet.

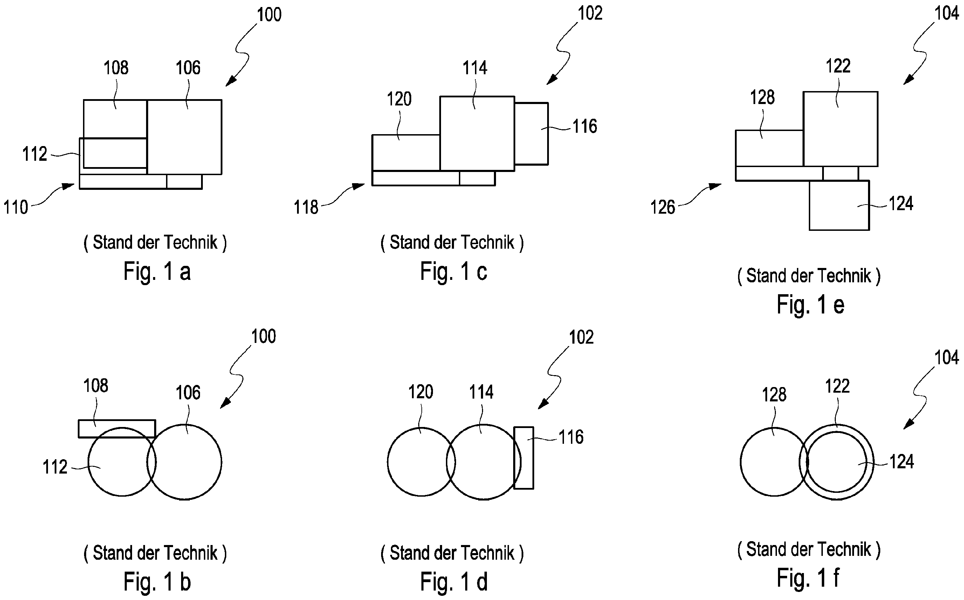

Figur 1 zeigt insgesamt drei Beispiele für Anordnungen 100, 102, 104 zum Antreiben von Fahrzeugen, die aus dem Stand der Technik bekannt sind. Dabei zeigen die Figuren 1a und 1b ein erstes Beispiel der Anordnung 100 aus zwei unterschiedlichen Perspektiven. Die Figuren 1c und 1d zeigen ein zweites Beispiel der Anordnung 102 aus zwei unterschiedlichen Perspektiven. Weiterhin zeigen die Figuren 1e und 1f ein drittes Beispiel der Anordnung 104 aus zwei unterschiedlichen Perspektiven.

Das in Figur 1a von oben und in Figur 1b von vorne gezeigte erste Beispiel der Anordnung 100 umfasst eine Elektromaschine 106, eine Leistungselektronik 108 und ein Getriebe 110, das ein Differential 112 aufweist. Dabei sind die Elektromaschine 106 und das Differential 112 nebeneinander und die Leistungselektronik 108 oberhalb des Differentials 112 angeordnet. Allerdings wird durch die Leistungselektronik 108, die hier oberhalb des Differentials 112 angeordnet ist, ein mögliches Volumen für einen Kofferraum eines Fahrzeugs verkleinert.

Das zweite Beispiel der Anordnung 102 weist eine Elektromaschine 114, eine Leistungselektronik 116 und ein Getriebe 118 mit einem Differential 120 auf. Dabei zeigt Figur 1c das zweite Beispiel der Anordnung 102 von oben und Figur 1d von vorne. Hierbei ist vorgesehen, dass die Elektromaschine 114 zwischen dem Differential 120 des Getriebes 118 und der Leistungselektronik 116 angeordnet ist. Falls ein Fahrzeug, das das zweite Beispiel der Anordnung 102 aufweist, in einen Crash verwickelt sein sollte, besteht hier die Gefahr, dass die Leistungselektronik 116 durch den Crash früh beaufschlagt wird.

Das dritte Beispiel der Anordnung 104 ist in Figur 1e von oben und in Figur 1f von vorne dargestellt. Auch dieses dritte Beispiel der Anordnung 104 umfasst eine Elektromaschine 122, eine Leistungselektronik 124 und ein Getriebe 126, das wiederum ein Differential 128 aufweist. Dabei ist vorgesehen, dass die Leistungselektronik 124 und das Differential 128 unmittelbar nebeneinander angeordnet sind. Die Leistungselektronik 124 und die Elektromaschine 122 sind hier hintereinander angeordnet, wobei ein Abschnitt des Getriebes 126 hier zwischen der Elektromaschine 122 und der Leistungselektronik 124 angeordnet ist.

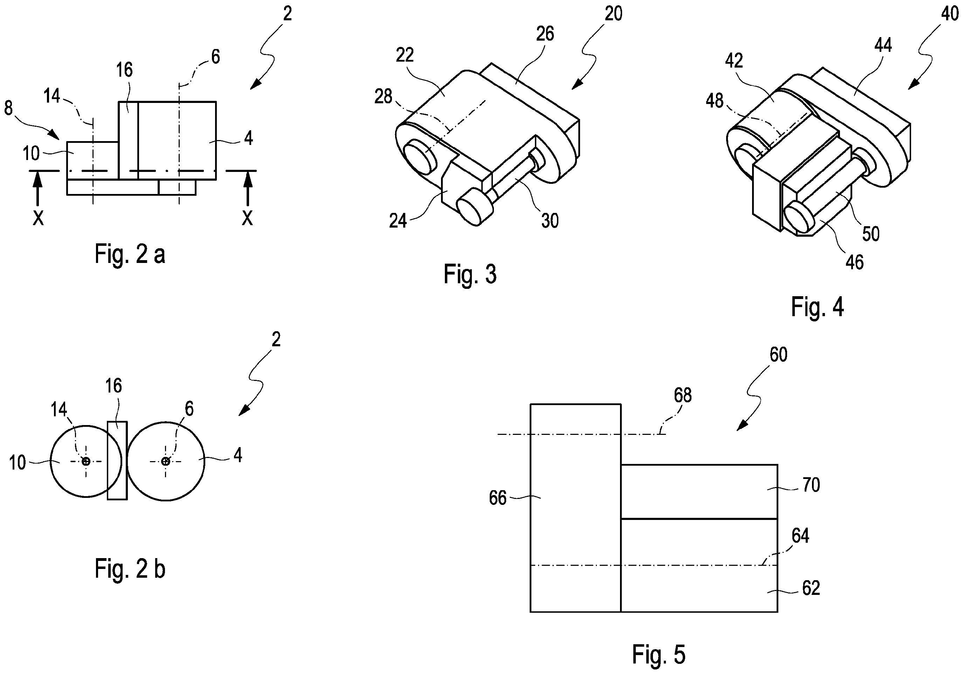

Die erste Ausführungsform der erfindungsgemäßen Antriebseinrichtung 2 zum Antreiben eines Fahrzeugs ist in Figur 2a von oben in Draufsicht und in Figur 2b in einer Schnittdarstellung durch eine Ebene X-X aus Figur 2a jeweils schematisch gezeigt. Dabei umfasst diese Antriebseinrichtung 2 eine Elektromaschine 4 mit einer als Rotorwelle ausgebildeten Welle 6. Weiterhin umfasst diese Antriebseinrichtung 2 ein Getriebe 8 mit einer ersten Getriebekomponente 10 und einer zweiten Getriebekomponente 12, wobei hier die erste Getriebekomponente 10 als Differential ausgebildet ist und/oder ein Differential aufweist. Außerdem umfasst das Getriebe 8 hier eine als Abtriebswelle ausgebildete Welle 14, die hier parallel zu der Welle 6 der Elektromaschine 4 angeordnet ist. Als weitere Komponente umfasst die Antriebseinrichtung 2 eine Leistungselektronik 16, die hier zwischen der Welle 6 der Elektromaschine 4 und der Welle 14 des Getriebes 8 angeordnet ist. Je nach Definition ist die Leistungselektronik 16 zumindest teilweise zwischen der Elektromaschine 4 und der ersten Getriebekomponente 10 bzw. dem Differential des Getriebes 8 angeordnet. Die Welle 6 der Elektromaschine 4 sowie die Welle 14 des Getriebes 8 sind hier über mindestens ein Bauteil der zweiten Getriebekomponente 12 miteinander drehbar verbindbar und/oder verbunden.

Die in Figur 3 schematisch dargestellte zweite Ausführungsform der erfindungsgemäßen Antriebseinrichtung 20 zum Antreiben eines Fahrzeugs umfasst ein erstes Gehäuse 22, das einen verschließbaren Deckel 24 aufweist, und ein zweites Gehäuse 26. Dabei ist in dem ersten Gehäuse 22 eine Elektromaschine angeordnet, die eine als Rotorwelle ausgebildete Welle 28 aufweist, die in Figur 3 gestrichelt dargestellt ist. Außerdem ist in dem ersten Gehäuse 22 eine erste Getriebekomponente, hier ein Differential, eines Getriebes angeordnet, wohingegen eine zweite Getriebekomponente dieses Getriebes in dem zweiten Gehäuse 26 angeordnet ist. Figur 3 zeigt auch eine Welle 30 des Getriebes, wobei ein Abschnitt dieser Welle 30 außerhalb des ersten Gehäuses 22 angeordnet ist. Außerdem ist diese Welle 30 des Getriebes parallel zu der Welle 28 der Elektromaschine angeordnet. Die beiden Wellen 28, 30 sind weiterhin durch die zweite Getriebekomponente innerhalb des zweiten Gehäuses 26 miteinander drehbar verbunden. Die beiden Wellen 28, 30 sind ferner senkrecht zu einer Fahrtrichtung des Fahrzeugs angeordnet. Es ist vorgesehen, dass der Deckel 24 des ersten Gehäuses abnehmbar ist. Zum Herstellen der Antriebseinrichtung 20 wird der Deckel 24 des ersten Gehäuses 22, in dem bereits die Elektromaschine und die erste Getriebekomponente angeordnet sind, entfernt, wodurch das erste Gehäuse 22 geöffnet wird. Danach wird eine Leistungselektronik durch eine Öffnung des Gehäuses 22 in dieses parallel zu den beiden Wellen 28, 30 eingeschoben und dabei zwischen den beiden Wellen 28, 30 angeordnet. Danach wird die Öffnung des ersten Gehäuses 22 mit dem Deckel 24 geschlossen.

Die in Figur 4 schematisch dargestellte dritte Ausführungsform der erfindungsgemäßen Antriebseinrichtung 40 zum Antreiben eines Fahrzeugs umfasst eine Elektromaschine 42, ein Getriebe 44, das mindestens eine als Differential ausgebildete Getriebekomponente aufweist, und eine Leistungselektronik 46. Hierbei ist vorgesehen, dass die Elektromaschine 42 und die Leistungselektronik 46 separate Gehäuse aufweisen. Außerdem weist die Elektromaschine 42 eine gestrichelt dargestellte Welle 48 auf, die hier als Rotorwelle ausgebildet und innerhalb des Gehäuses der Elektromaschine 42 angeordnet ist. Parallel hierzu ist eine als Abtriebswelle ausgebildete Welle 50 des Getriebes 44 angeordnet, die hier außerhalb eines Gehäuses des Getriebes 44 angeordnet ist, wobei das Getriebe 44 mindestens eine Getriebekomponente aufweist, die als Differential ausgebildet und/oder zu bezeichnen ist. Auch hier ist vorgesehen, dass die Leistungselektronik 46 hier zwischen der Welle 48 der Elektromaschine 42 und der Welle 50 des Getriebes 44 angeordnet ist. Außerdem ist die Leistungselektronik 46 hier auch zwischen dem Gehäuse der Elektromaschine 42 und der Welle 50 des Getriebes 44 angeordnet.

Die vierte Ausführungsform der erfindungsgemäßen Antriebseinrichtung 60 zum Antreiben eines Fahrzeugs ist in Figur 5 schematisch dargestellt und weist eine Elektromaschine 62 mit einer als Rotorwelle ausgebildeten Welle 64, ein Getriebe 66 mit einer als Abtriebswelle ausgebildeten Welle 68 und eine Leistungselektronik 70 auf. Weiterhin weist das Getriebe 66 mindestens eine als Differential ausgebildete Getriebekomponente auf. Die beiden Wellen 64, 68 der Elektromaschine 62 und des Getriebes 66 sind hier zueinander parallel sowie senkrecht zu einer vorgesehenen Fahrtrichtung des Fahrzeugs angeordnet. Auch hier ist, wie bei den voranstehend vorgestellten Ausführungsformen der Antriebseinrichtung 2, 20, 40 vorgesehen, dass die Leistungselektronik 70 zwischen der Welle 64 der Elektromaschine 62 und der Welle 68 des Getriebes 66 angeordnet ist.

Eine jeweils vorgestellte Ausführungsform der erfindungsgemäßen Antriebseinrichtung 2, 20, 40, 60 wird durch jeweils eine Ausführungsform des erfindungsgemäßen Verfahrens hergestellt. Dabei ist jeweils vorgesehen, dass die jeweilige Welle 6, 28, 48, 64 der Elektromaschine 4, 42, 62 und die jeweilige Welle 14, 30, 50, 68 des Getriebes 8, 44, 66 miteinander drehbar verbunden werden. Außerdem wird die Leistungselektronik 16, 46, 70 zwischen den beiden entsprechenden Wellen 6, 14, 28, 30, 48, 50, 64, 68 angeordnet. Dabei ist es in einer Ausgestaltung eines jeweiligen Verfahrens möglich, die Leistungselektronik 16, 46, 70 je nach Definition seitlich und/oder von vorne zwischen die beiden entsprechenden Wellen 6, 14, 28, 30, 48, 50, 64, 68 einzuschieben oder von vorne, d. h. parallel zu den beiden Wellen 6, 14, 28, 30, 48, 50, 64, 68, auf das Getriebe 8, 44, 66, d. h. zumindest auf eine Getriebekomponente 12 und/oder ein Gehäuse 26 eines jeweiligen Getriebes 8, 44, 66 aufzusetzen.

## Patentansprüche

1. Antriebseinrichtung für ein Fahrzeug, die eine Elektromaschine (4, 42, 62), eine Leistungselektronik (16, 46, 70) und ein Getriebe (8, 44, 66) aufweist, wobei die Leistungselektronik (16, 46, 70) zwischen einer Welle (6, 28, 48, 64) der Elektromaschine (4, 42, 62) und einer Welle (14, 30, 50, 68) des Getriebes (8, 44, 66) angeordnet ist.

2. Antriebseinrichtung nach Anspruch 1, bei der das Getriebe (8, 44, 66) ein Differential aufweist, wobei das Differential die Welle (14, 30, 50, 68) des Getriebes (14, 30, 50, 68) aufweist, wobei die Leistungselektronik (16, 46, 70) zwischen der Welle (6, 28, 48, 64) der Elektromaschine (4, 42, 62) und der Welle (14, 30, 50, 68) des Differentials angeordnet ist.

3. Antriebseinrichtung nach Anspruch 1 oder 2, bei der die Welle (6, 28, 48, 64) der Elektromaschine (4, 42, 62) als Rotorwelle und die Welle (14, 30, 50, 68) des Getriebes (8, 44, 66) als Abtriebswelle ausgebildet ist.

4. Antriebseinrichtung nach einem der Ansprüche 1 bis 3, bei dem die Elektromaschine (4, 42, 62) und die Leistungselektronik (16, 46, 70) in einem Gehäuse (22) angeordnet sind.

5. Antriebseinrichtung nach einem der Ansprüche 1 bis 3, bei dem die Leistungselektronik (16, 46, 70) in einem eigenen Gehäuse angeordnet ist.

6. Verfahren zum Herstellen einer Antriebseinrichtung (2, 20, 40, 60) für ein Fahrzeug aus einer Elektromaschine (4, 42, 62), einer Leistungselektronik (16, 46, 70) und einem Getriebe, wobei die Leistungselektronik (16, 46, 70) zwischen einer Welle (6, 28, 48, 64) der Elektromaschine (4, 42, 62) und einer Welle (14, 30, 50, 68) des Getriebes (8, 44, 66) angeordnet wird.

7. Verfahren nach Anspruch 6, bei dem die Elektromaschine (4, 42, 62) und das Getriebe (8, 44, 66) zunächst miteinander verbunden werden, und bei dem die Leistungselektronik (16, 46, 70) erst danach zwischen der Welle (6, 28, 48, 64) der Elektromaschine (4, 42, 62) und der Welle (14, 30, 50, 68) des Getriebes (8, 44, 66) angeordnet wird.

8. Verfahren nach Anspruch 6 oder 7, bei dem die Leistungselektronik (16, 46, 70) zwischen die Welle der Elektromaschine (4, 42, 62) und die Welle (14, 30, 50, 68) des Getriebes (8, 44, 66) geschoben wird.

9. Verfahren nach einem der Ansprüche 6 bis 8, bei dem die Leistungselektronik (16, 46, 70) in einem Gehäuse (22) angeordnet wird, das eine Öffnung aufweist, die durch einen Deckel (24) verschließbar ist, wobei der Deckel (24) geöffnet wird, wobei die Leistungselektronik (16, 46, 70) durch die Öffnung hindurch in dem Gehäuse (22) angeordnet wird, und wobei die Öffnung mit dem Deckel (24) wieder verschlossen wird.
